# EUROPÄISCHE PATENTANMELDUNG

(11) **EP 4 810 233 A1**
(43) Veröffentlichungstag der Anmeldung: **23.09.2026**
(21) Anmeldenummer: 26165448.7
(22) Anmeldetag: 17.03.2026
(51) Int. Cl.: B29C 64/245, B29C 64/30, B33Y 10/00, B33Y 30/00, B33Y 40/00, B33Y 80/00

(54) **TECHNIK ZUM HERSTELLEN EINER KOMPONENTE EINER BEHÄLTERBEHANDLUNGSANLAGE**

(30) Priorität: 21.03.2025 DE 102025111036
(71) Anmelder: Krones AG, 93073 Neutraubling (DE)
(72) Erfinder: WAGNER, Martin, 93073 Neutraubling (DE); NEUBER, Andreas, 93073 Neutraubling (DE)
(74) Vertreter: v. Bezold & Partner Patentanwälte - PartG mbB

(57) **Zusammenfassung**

Ein Verfahren zum Herstellen einer Komponente (10) einer Behälterbehandlungsanlage. Das Verfahren weist auf: additives Fertigen der Komponente (10) mittels einer additiven Fertigungsvorrichtung (12), die ein Fertigungsbett (14) mit einer Stützfläche (16) aufweist, auf der die Komponente (10) additiv gefertigt wird. Das Verfahren weist ferner auf: Formen einer Strukturierung (22) in eine die Stützfläche (16) des Fertigungsbetts (14) kontaktierende Aufstandsfläche (18) der Komponente (10) mittels einer vorbestimmten Strukturierung (20) der Stützfläche (16) der additiven Fertigungsvorrichtung (12) beim additiven Fertigen der Komponente (10).

## Beschreibung

### Technisches Gebiet

Die Erfindung betrifft ein Verfahren zum Herstellen einer Komponente einer Behälterbehandlungsanlage. Die Erfindung betrifft auch eine zugehörige Komponente und eine zugehörige Behälterbehandlungsanlage.

### Technischer Hintergrund

Der Einsatz von additiver Fertigung für die Vor-Ort-Versorgung von Kunden mit Ersatzteilen oder Verschleißteilen birgt das Potential, Anlagenstillstandzeiten und Lagerkosten erheblich zu verringern. Bspw. kann der Kunde direkt vor Ort ein entsprechendes Ersatzteil oder Verschleißteil für die Anlage additiv fertigen lassen, wenn das Teil benötigt wird. Der Ausdruck "additive Fertigung" wird häufig auch als 3D-Druck oder generative Fertigung bezeichnet. Im Folgenden wird jedoch nur noch die Bezeichnung "additive Fertigung" verwendet.

Die Vor-Ort-Versorgung von Kunden mit Ersatzteilen oder Verschleißteilen durch den Einsatz von additiver Fertigung birgt jedoch auch gewisse Risiken. Beispielsweise kann ein Kunde zum additiven Fertigen eine additive Fertigungsvorrichtung aus einem Pool mehrerer vorhandener additiver Fertigungsvorrichtungen auswählen. Die ausgewählte additive Fertigungsvorrichtung ist möglicherweise nicht geeignet, die gewünschte Komponente in der gewünschten Qualität herzustellen. So kann es bspw. vorkommen, dass der Kunde nach dem additiven Fertigen ein augenscheinlich passendes Bauteil bzw. Ersatzteil in die Maschine einbaut, das Bauteil allerdings nicht den entsprechenden Einflüssen in der Maschine standhält. Ein weiterer Aspekt betrifft Fragen der Fälschungssicherheit und Produktsicherheit, die bspw. dann relevant werden, wenn aufgrund eines Bauteilversagens in einer Maschine, ggf. mit Betriebsausfall und Folgeschäden, fraglich ist, ob das betroffene Bauteil tatsächlich mit der dafür zugelassenen bzw. freigegebenen additiven Fertigungsvorrichtung gefertigt wurde.

Der Erfindung liegt die Aufgabe zu Grunde, eine verbesserte Technik zum Prüfen und Sicherstellen einer gewünschten Bauteilqualität einer additiv gefertigten Komponente einer Behälterbehandlungsanlage zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft ein Verfahren zum Herstellen einer Komponente einer Behälterbehandlungsanlage (z. B. wie hierin offenbart). Das Verfahren weist ein additives Fertigen der Komponente mittels einer additiven Fertigungsvorrichtung (z. B. 3D-Drucker), die ein Fertigungsbett (z. B. Druckbett) mit einer Stützfläche aufweist, auf der die Komponente additiv gefertigt wird, auf. Das Verfahren weist ferner ein Formen einer Strukturierung (z. B. Strukturrelief), vorzugsweise Mikro- oder Submikrostrukturierung, in eine die Stützfläche des Fertigungsbetts kontaktierende Aufstandsfläche der Komponente mittels einer vorbestimmten (z. B. fertigungsbettindividuellen) Strukturierung (z. B. Strukturrelief), vorzugsweise Mikro- oder Submikrostrukturierung, der Stützfläche der additiven Fertigungsvorrichtung beim additiven Fertigen der Komponente, auf.

Vorteilhaft ermöglicht das Verfahren, eine durch die vorbestimmte Strukturierung der Stützfläche bewirkte, komplementäre Strukturierung in die Aufstandsfläche einzuformen. Diese Strukturierung kann bspw. dazu genutzt werden, eine Kennzeichnung an der Komponente vorzusehen, ohne dass dafür ein zusätzlicher Bearbeitungsschritt, z. B. mittels Laserbeschriftung, Lackierung oder Gravuren, erforderlich ist. Die Strukturierung kann vorteilhaft bereits zu Beginn der additiven Fertigung direkt in die unterste Materialschicht eingeformt werden. Die Strukturierung kann vorteilhaft auf viele verschiedene, miteinander kombinierbare Weisen genutzt werden. Vorteilhaft kann die Strukturierung insbesondere als eine Art Gütesiegel oder Qualitätsindikator genutzt werden, mit dem bspw. belegt werden kann, dass die richtige (geeignete) additive Fertigungsvorrichtung zum additiven Fertigen der Komponente genutzt wurde. Die Strukturen der Strukturierung können die Komponente optisch eindeutig und leicht erkennbar als Bauteil eines bestimmten Herstellers oder einer bestimmten additiven Fertigungsvorrichtung identifizieren. Die Strukturierung kann vorteilhaft die Funktion eines Wasserzeichens bzw. Fingerabdrucks von der additiven Fertigungsvorrichtung ermöglichen. In diesem Kontext kann die Strukturierung auch als ein Faktor eines Multifaktor-Fälschungsschutzes bzw. zum Erhöhen der Produktsicherheit genutzt werden.

Vorzugsweise bezieht sich der Ausdruck "Aufstandsfläche" auf einen Zustand bei der additiven Fertigung, bei der die Komponente über die Aufstandsfläche auf der Stützfläche des Fertigungsbetts steht und in Kontakt mit der Stützfläche des Fertigungsbetts ist.

Es ist möglich, dass die Aufstandsfläche eine Funktionsfläche der Komponente zum Ausführen einer Funktion (z. B. Führen, Ineinandergreifen usw.) ist oder keine Funktionsfläche der Komponente ist.

Bevorzugt kann die additive Fertigungsvorrichtung dazu ausgebildet sein, die Komponente im FDM-Verfahren (engl. Fused Deposition Modeling), auch FLM-Verfahren (engl. Fused Layer Modelling) oder FFF-Verfahren (engl. Fused Filament Fabrication) genannt, additiv zu fertigen.

Vorzugsweise ist die Komponente durch mehrere aneinander angrenzende, additiv gefertigte Materialschichten gebildet.

In einem Ausführungsbeispiel bewirkt die Strukturierung der Aufstandsfläche eine (z. B. irisierende, schillernde oder hologrammartige) Strukturfärbung (mindestens eine Strukturfarbe - engl. structural color / structural coloration) der Strukturierung der Aufstandsfläche, vorzugweise durch mindestens eines von Lichtstreuung, Lichtbrechung und Lichtreflexion mittels geometrischer Formen, Größen und/oder Anordnungen von Strukturen der Strukturierung der Aufstandsfläche. Alternativ oder zusätzlich bewirkt die vorbestimmte Strukturierung der Stützfläche eine (z. B. irisierende, schillernde oder hologrammartige) Strukturfärbung (mindestens eine Strukturfarbe - engl. structural color / structural coloration) der vorbestimmten Strukturierung der Stützfläche, vorzugweise durch mindestens eines von Lichtstreuung, Lichtbrechung und Lichtreflexion mittels geometrischer Formen, Größen und/oder Anordnungen von Strukturen der vorbestimmten Strukturierung der Stützfläche. Vorteilhaft können auf diese Weise farbige Effekte erzielt werden, ohne dass Farbpigmente (Fremdmaterial) benötigt wird oder ohne dass für die Färbung ein zusätzlicher Behandlungsschritt notwendig ist. Vorteilhaft kann damit bspw. ein unberechtigtes Nachahmen der Strukturierung wesentlich erschwert werden. Die Strukturfärbung kann somit als ein Sicherheitsmerkmal dienen, wie es bspw. bei Banknoten und offiziellen Dokumenten genutzt wird, um Fälschungen zu verhindern oder zumindest zu erschweren. Vorteilhaft können sich die Farben der Strukturfärbung je nach Betrachtungswinkel ändern und schwer reproduzierbar sein.

In einem weiteren Ausführungsbeispiel weist die (z. B. strukturgefärbte) Strukturierung der Aufstandsfläche und/oder der Stützfläche eine Kennzeichnung (z. B. Bild, Beschriftung, Text usw.) und/oder einen Verschleißindikator auf. Vorteilhaft kann mittels der Kennzeichnung jegliche gewünschte Information bereitgestellt werden, z. B. zur Einzelidentifikation der additiven Fertigungsvorrichtung. Auch möglich ist, dass die Strukturierung für jede Generation von additiven Fertigungsvorrichtungen unterschiedlich ist. Dies kann der Bauteilqualität dienen, falls z. B. eine spezielle Komponente nur auf Fertigungsvorrichtungen einer bestimmten Generation in ausreichender Qualität additiv gefertigt werden kann. Die Nutzung als Verschleißanzeige kann vorteilhaft auf einen Verschleißzustand der Komponente, einen Verschleißzustand der Vorrichtung, in der die Komponente eingebaut wird und/oder einen Verschleißzustand der additiven Fertigungsvorrichtung hinweisen.

In einer Ausführungsform weist die (z. B. strukturgefärbte) Strukturierung der Aufstandsfläche und/oder der Stützfläche mindestens eines auf von:
- mindestens ein alphanumerisches Zeichen, vorzugsweise ein Wort oder ein Text,
- ein Bild; und
- einen visuellen Code, vorzugsweise QR-Code oder Barcode (oder Aztec Code, Data Matrix, PDF417, AR-Code Zahlen-/Buchstabencode).

Vorteilhaft kann die Nutzung von Codes, Bildern oder Text eine Identifizierbarkeit der Komponente und/oder der additiven Fertigungsvorrichtung ermöglichen. Ferner kann vorteilhaft der Abruf von Zusatzinformationen ermöglicht werden, z. B. durch das Abscannen eines Codes, der auf die weiterführenden Informationen verweist.

In einer weiteren Ausführungsform weist die (z. B. strukturgefärbte) Strukturierung der Aufstandsfläche und/oder der Stützfläche mindestens eines von ein Raster, eine (z. B. Millimeter-) Skala und ein Koordinatensystem auf. Vorzugsweise kann das Verfahren ferner ein Überprüfen einer Dimensionierung der additiv gefertigten Komponente durch Überprüfen des Rasters, der Skala und/oder des Koordinatensystems, vorzugsweise manuell oder mittels einer (z. B. kameragestützten) Erfassungseinrichtung, z. B. eines tragbaren Endgeräts, aufweisen. Vorteilhaft kann mittels Raster, Skala und Koordinatensystem eine sofortige manuelle oder optische messbare Maßkontrolle ermöglicht werden, ggf. ohne dafür Standardmessmittel (z. B. Schiebelehre o.ä.) zu benötigen. Im Idealfall kann ein Nullpunkt des Koordinatensystems exakt deckungsgleich mit einem im virtuellen 3D-Modell bzw. G-Code definierten Nullpunkt sein. So kann die Fertigungsqualität und die Kalibrierung sofort nach Beendigung des Fertigungsvorgangs kontrolliert werden. Vorteilhaft kann es auch möglich sein, durch ein bspw. mobiles Endgerät das Raster, die Skala und/oder das Koordinatensystem zu scannen und einen Soll-/Ist-Abgleich, z. B. unter Bezugnahme auf eine Baujob-ID, durchzuführen, auf Abmessungen usw. zu prüfen und in einer Datenbank zu dokumentieren. Zudem kann bspw. die Qualität der Kalibrierung der additiven Fertigungsvorrichtung mitdatiert und dokumentiert werden.

In einer Ausführungsvariante ist mindestens eines erfüllt von:
- die (z. B. strukturgefärbte) Strukturierung der Aufstandsfläche und/oder der Stützfläche weist eine Identifikationszeichenfolge (z. B. ID oder Identifikationsnummer) zur Identifikation des Fertigungsbetts und/oder der additiven Fertigungsvorrichtung auf;
- die (z. B. strukturgefärbte) Strukturierung der Aufstandsfläche und/oder der Stützfläche ist derart, dass das Fertigungsbett und/oder die additive Fertigungsvorrichtung mittels der Strukturierung einzeln identifizierbar ist; und
- die (z. B. strukturgefärbte) Strukturierung der Aufstandsfläche und/oder der Stützfläche ist zur Einzelidentifikation der additiven Fertigungsvorrichtung und/oder des Fertigungsbetts ausgebildet.

Vorteilhaft kann die Herstellung der Komponente somit eindeutig bis zur additiven Fertigungsvorrichtung zurückverfolgt werden. Unterschiedlichen additiven Fertigungsvorrichtungen können unterschiedliche Kennzeichnungen (bspw. Logo, Bild, Beschriftung, Seriennummer, visueller Code etc.) eindeutig zugeordnet werden.

In einem Ausführungsbeispiel ist mindestens eines erfüllt von:
- die Strukturierung der Stützfläche und/oder Aufstandsfläche ist so dimensioniert, dass sie für das menschliche Auge nicht sichtbar ist; und
- sämtliche Strukturen der Strukturierung der Stützfläche und/oder Aufstandsfläche sind ≤ 30 µm, ≤ 10 µm oder ≤ 5 µm.

Vorteilhaft kann die Strukturierung somit derart ausgestaltet sein, dass sie mit bloßem Auge nicht sichtbar ist, sondern bspw. nur unter einem Mikroskop erkennbar ist. So besteht vorteilhaft die Möglichkeit, einen kostengünstigen, für das Auge unsichtbaren Fälschungsschutz zu integrieren.

In einem weiteren Ausführungsbeispiel weist das Fertigungsbett ein, vorzugsweise wechselbares, Bettelement, vorzugsweise Bettplatte oder Bettfolie, mit der Stützfläche und der vorbestimmten Strukturierung auf. Vorzugsweise kann das Verfahren ferner aufweisen: Überprüfen des Bettelements mittels der additiven Fertigungsvorrichtung und vorzugsweise davon abhängiges additives Fertigen der Komponente. Beispielsweise kann die Fertigungsvorrichtung das Vorhandensein einer vorbestimmten Kennzeichnung an dem Bettelement (z. B. kameragestützt) überprüfen oder das Empfangen eines Signals von einem (z. B. Drahtlos-) Kommunikationsgerät (z. B. Transponder, besonders bevorzugt RFID-Transponder) des Bettelements überprüfen. Alternativ oder zusätzlich kann das additive Fertigen der Komponente bspw. abhängig von einem Empfangen oder Nichtempfangen eines (z. B. Identifikations-) Signals von einem (z. B. Drahtlos-) Kommunikationsgerät (z. B. Transponder, besonders bevorzugt RFID-Transponder) des Bettelements des Fertigungsbetts erfolgen, wobei bevorzugt abhängig von dem Empfangen oder dem Nichtempfangen des Signals von dem Kommunikationsgerät eine strukturierte Kennzeichnung in oder an der Komponente additiv gefertigt wird, z. B. zum Angeben einer Information zum Empfangen oder Nichtempfangen des Signals.

Vorteilhaft kann in dem Bettelement eine Kennzeichnung, z. B. in Form eines Transponders eingebettet sein. Die additive Fertigungsvorrichtung kann so überprüfen, ob das korrekte Bettelement angebracht wurde und ggf. die Fertigung abbrechen oder gar nicht erst starten. Auch möglich ist, dass bei Erkennung eines falschen Druckelements die Komponente in gewissen Bereichen absichtlich anders als das 3D-Modell additiv gefertigt wird (d.h., z. B. eine strukturierte Kennzeichnung in oder an der Komponente additiv gefertigt wird). Speziell könnte bspw. der Infill der Komponente eine andere Struktur als bei der Vorlage aufweisen oder es könnte ein "versteckter Fehler" im Komponenteninneren, z. B. ein geometrisch eindeutig definierter Hohlraum (z. B. ein dreidimensionales "F", für "Fake", oder ein beliebiger anderer Fehlercode) ins Komponenteninnere gefertigt werden. Bestehen Zweifel, ob die korrekte additive Fertigungseinrichtung verwendet wurde, kann dann bspw. die Komponente aufgeschnitten und der Infill bzw. der versteckte Fehlercode überprüft werden.

In einer Ausführungsform weist die additiv gefertigte Komponente mindestens einen Nanopartikelmarker (Marker aus Nanopartikeln) zum Identifizieren eines Materials der additiv gefertigten Komponente auf. Vorzugsweise ist ferner mindestens eines erfüllt von:
- die Komponente ist vollständig aus mehreren aneinander angrenzenden, additiv gefertigten Materialschichten gebildet und alle Materialschichten weisen einen oder mehrere unterschiedliche Nanopartikelmarker auf;
- der mindestens eine Nanopartikelmarker weist insgesamt einen Volumen- und/oder Gewichtsanteil an der Komponente von ≥ 0,5 % und/oder ≤ 3 % auf;
- der mindestens eine Nanopartikelmarker ist ein lumineszierender organischer und/oder anorganischer und/oder metallorganischer Farbstoff, ein Pigment und/oder eine Komplexverbindung;
- der mindestens einen Nanopartikelmarker wurde mit einem Grundstoffgranulat, vorzugsweise Kunststoffgranulat, zu einem Gemisch vermischt, das zu einem Filament extrudiert wurde, aus dem die Komponente additiv gefertigt wurde; und
- ein bei Bestrahlung der Komponente mit elektromagnetischer Strahlung mittels einer Strahlungsquelle aufgenommenes Spektrum identifiziert das Material der Komponente (z. B. durch Auswerten des aufgenommenen Spektrums auf eine Übereinstimmung mit mindestens einem vorgegebenen Spektrum, das einem vorbestimmten Material mit mindestens einem Nanopartikelmarker zum Identifizieren des vorbestimmten Materials zugeordnet ist).

Vorteilhaft kann so ermöglicht werden, dass erkannt werden kann, ob die additiv gefertigte Komponente tatsächlich aus dem gewünschten Material additiv gefertigt wurde. Hierzu werden Nanopartikel als Marker verwendet, über die das Material eindeutig und auf zuverlässige Weise bspw. durch Spektrumsuntersuchung identifiziert werden kann. Vorteilhaft kann so sichergestellt werden, dass das richtige Material für das additiv gefertigte Bauteil genutzt wurde, was sich vorteilhaft auf die Bauteil-, die Produkt- und/oder die Produktionssicherheit (z. B. Lagerhaltung, richtiges Bauteil in der Maschine, etc.) auswirken kann. Vorteilhaft verändern die als Marker genutzten Nanopartikel dabei die Eigenschaften des (Grundstoffs des) vorbestimmten Materials nicht. Vorteilhaft kann in Kombination mit der Strukturierung in der Aufstandsfläche ein 2-Faktor-Schutz erreicht werden, mit dem die Komponentengüte umfassend belegt werden kann durch Identifikation des Materials und durch Identifikation der additiven Fertigungsvorrichtung.

Es ist auch möglich, einen elektronischen Abgleich zwischen einer Fertigungsvorrichtung-ID der additiven Fertigungsvorrichtung, einer Fertigungsbett-ID eines Bettelements des Fertigungsbetts, einer G-Code-ID für die Komponente und einer Material-ID eines Materials der Komponente durchzuführen, z. B. zum Erhöhen der Produktsicherheit oder Fälschungssicherheit. Fehlt eine dieser vier IDs oder ist der Abgleich unvollständig, kann ein Fehler ausgegeben werden, z. B. um einen Fehlbetrieb oder Missbrauch zu verhindern.

In einer weiteren Ausführungsform ist mindestens eines erfüllt von:
- die Komponente ist ein Verschleißteil oder ein Ersatzteil der Behälterbehandlungsanlage; und
- die Komponente ist eine Abdeckkomponente, ein Anlaufelement, ein Abweiselement, ein Gleitelement, ein Distanzelement, ein Fingerelement, eine Halterung, ein Kettenrad, ein Kettenführungselement, eine Klammer, eine Klemme, ein Klotz, ein Keil, ein Lagerelement, ein Mitnehmer, ein Führungselement, ein Ringelement, eine Rolle, ein Rad, eine Scheibe, eine Buchse, eine Hülse, ein Spannelement, ein Dämpfungselement, ein Verbindungselement oder ein Zentrierelement.

Ein weiterer Aspekt betrifft eine Komponente für eine Behälterbehandlungsanlage, wobei die Komponente nach einem Verfahren wie hierin offenbart hergestellt ist. Vorteilhaft können mit der Komponente die gleichen Vorteile erzielt werden, die bereits unter Bezugnahme auf das Verfahren erläutert wurden.

Ein weiterer Aspekt betrifft eine Behälterbehandlungsanlage. Die Behälterbehandlungsanlage weist mindestens eine Behälterbehandlungs- und/oder -transportvorrichtung auf. Die Behälterbehandlungsanlage weist ferner eine additive Fertigungsvorrichtung (z. B. 3D-Drucker) zum additiven Fertigen einer Komponente der mindestens einen Behälterbehandlungs- und/oder -transportvorrichtung, vorzugsweise nach einem Verfahren wie hierin offenbart, auf. Die additive Fertigungsvorrichtung weist ein Fertigungsbett (z. B. Druckbett) mit einer Stützfläche auf, auf der die Komponente additiv fertigbar ist. Die Stützfläche weist eine vorbestimmte (z. B. fertigungsbettindividuelle) Strukturierung (z. B. Strukturrelief), vorzugsweise Mikro- oder Submikrostrukturierung, auf, die dazu ausgebildet ist, eine Strukturierung (z. B. Strukturrelief), vorzugsweise Mikro- oder Submikrostrukturierung, in eine die Stützfläche des Fertigungsbetts kontaktierende Aufstandsfläche der Komponente beim additiven Fertigen der Komponente einzuformen. Vorteilhaft können mit der Behälterbehandlungsanlage die gleichen Vorteile erzielt werden, die bereits unter Bezugnahme auf das Verfahren erläutert wurden. Selbiges gilt für die untenstehend erläuterten, bevorzugten Ausführungsbeispiele der Behälterbehandlungsanlage.

Die Behälterbehandlungsanlage kann bspw. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein. Die Behälterbehandlungsanlage kann beispielsweise eine Getränkeabfüllanlage sein.

Beispielsweise können die Behälter als Flaschen, Dosen, Kanister, Kartons, Flakons, Phiolen, Tuben usw. ausgeführt sein.

In einem Ausführungsbeispiel ist mindestens eines erfüllt von:
- die vorbestimmte Strukturierung der Stützfläche bewirkt eine (z. B. irisierende, schillernde oder hologrammartige) Strukturfärbung (mindestens eine Strukturfarbe - engl. structural color / structural coloration) der vorbestimmten Strukturierung der Stützfläche, vorzugweise durch mindestens eines von Lichtstreuung, Lichtbrechung und Lichtreflexion mittels geometrischer Formen, Größen und/oder Anordnungen von Strukturen der vorbestimmten Strukturierung der Stützfläche;
- die (z. B. strukturgefärbte) vorbestimmte Strukturierung der Stützfläche weist mindestens eines auf von: eine Kennzeichnung und/oder einen Verschleißindikator; mindestens ein alphanumerisches Zeichen, vorzugsweise ein Wort oder ein Text; ein Bild; einen visuellen Code, vorzugsweise QR-Code oder Barcode (oder Aztec Code, Data Matrix, PDF417, AR-Code Zahlen-/Buchstabencode); mindestens eines von ein Raster, eine (z. B. Millimeter-) Skala und ein Koordinatensystem; und eine Identifikationszeichenfolge (z. B. ID oder Identifikationsnummer) zur Identifikation des Fertigungsbetts und/oder der additiven Fertigungsvorrichtung;
- die (z. B. strukturgefärbte) vorbestimmte Strukturierung der Stützfläche ist zur Einzelidentifikation der additiven Fertigungsvorrichtung und/oder des Fertigungsbetts ausgebildet;
- die vorbestimmte Strukturierung der Stützfläche ist so dimensioniert, dass sie für das menschliche Auge nicht sichtbar ist; und
- sämtliche Strukturen der vorbestimmten Strukturierung der Stützfläche sind ≤ 30 µm, ≤ 10 µm oder ≤ 5 µm.

In einem weiteren Ausführungsbeispiel weist das Fertigungsbett ein wechselbares Bettelement, vorzugsweise Bettplatte oder Bettfolie, mit der die (z. B. strukturgefärbten) vorbestimmte Strukturierung aufweisenden Stützfläche auf.

In einem Ausführungsbeispiel ist mindestens eines erfüllt von:
- das Bettelement weist ein (z. B. Drahtlos-) Kommunikationsgerät, vorzugsweise Transponder, besonders bevorzugt RFID-Transponder, auf, vorzugsweise zur Identifikation des Bettelements gegenüber der additiven Fertigungsvorrichtung;
- die additive Fertigungsvorrichtung weist eine Steuereinrichtung auf, die dazu konfiguriert ist, die additive Fertigungsvorrichtung abhängig von einem Empfangen oder Nichtempfangen eines (z. B. Identifikations-) Signals von einem Kommunikationsgerät des Bettelements zu betreiben, wobei vorzugsweise beim additiven Fertigen der Komponente abhängig von dem Empfangen oder dem Nichtempfangen des (z. B. Identifikations-) Signals von dem Kommunikationsgerät eine strukturierte Kennzeichnung in oder an der Komponente additiv gefertigt wird, bevorzugt zum Angeben einer Information zum Empfangen oder Nichtempfangen des (z. B. Identifikations-) Signals; und
- das Fertigungsbett weist eine Aufnahme auf, in oder an der das Bettelement lösbar aufgenommen ist, und eine Unterseite des Bettelements und eine Bodenfläche der Aufnahme sind zum Ineinandergreifen, vorzugsweise miteinander Verrasten, geformt.

Vorteilhaft kann eine spezielle mechanische Form der Unterseite des Bettelements verhindern, dass das Bettelement mit der vorbestimmten Strukturierung an einer ungeeigneten (nicht freigegebenen oder zugelassenen) additiven Fertigungsvorrichtung verwendet wird. Auch kann bspw. bei einer Inhouse-Überholung / einem Update die additive Fertigungsvorrichtung entsprechend mit einem neuen, angepassten Bettelement ausgestattet werden.

Vorzugsweise kann sich der Begriff "Steuereinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Steuereinrichtung kann beispielsweise eine Zentralsteuereinrichtung sein oder mehrere dezentral bzw. verteilt angeordnete Steuereinheiten aufweisen.

Beispielsweise kann die Steuereinrichtung der additiven Fertigungsvorrichtung räumlich zugeordnet sein, z. B. in einem Gehäuse der additiven Fertigungsvorrichtung angeordnet sein. Alternativ oder zusätzlich kann die Steuereinrichtung bspw. eine übergeordnete Steuereinheit sein oder aufweisen. Diese kann bspw. Informationen abgleichen (z. B. Fertigungsvorrichtung, Druckbett, Material usw.) und dann eine Freigabe an die additive Fertigungsvorrichtung senden.

Alle unter Bezugnahme auf das Verfahren offenbarten Merkmale sind auch in Bezug auf die hierin offenbarte Komponente und die hierin offenbarte Behälterbehandlungsanlage offenbart und beanspruchbar. Alle unter Bezugnahme auf die Behälterbehandlungsanlage offenbarten Merkmale sind auch in Bezug auf das hierin offenbarte Verfahren und die hierin offenbarte Komponente offenbart und beanspruchbar.

Es versteht sich, dass das hierin offenbarte Verfahren zum Herstellen jeglicher Komponente (z. B. umfassend eine Komponente, die nicht für eine Behälterbehandlungsanlage bestimmt ist) anwendbar, offenbart und beanspruchbar ist. Selbiges gilt für die hierin offenbarte Komponente.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer additiven Fertigungsvorrichtung;
- Figur 2: eine Draufsicht auf eine Stützfläche eines Fertigungsbetts der additiven Fertigungsvorrichtung;
- Figur 3: eine Ansicht von unten auf eine Aufstandsfläche einer Komponente; und
- Figuren 4 - 9: beispielhafte Strukturierungen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

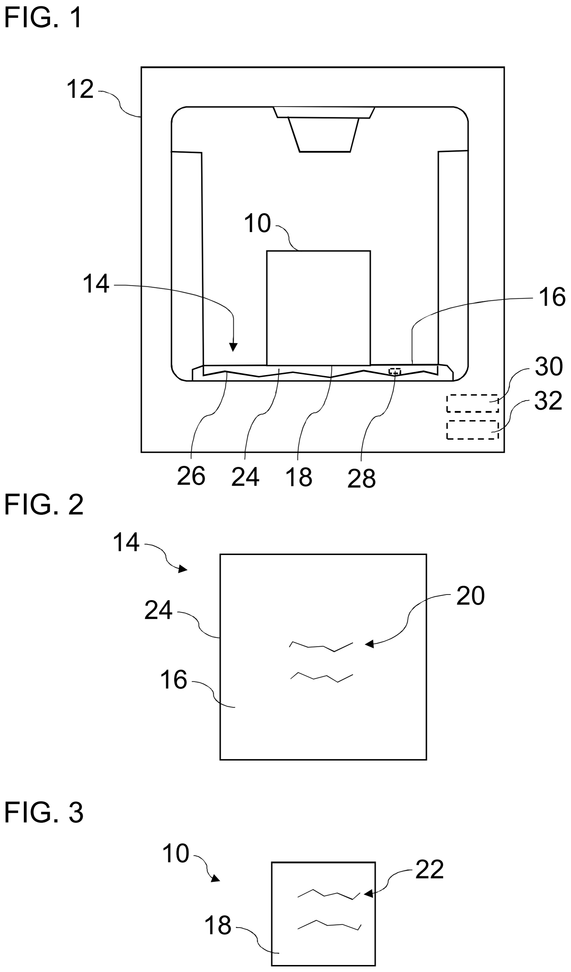

Die Figur 1 zeigt eine additiv gefertigte Komponente 10 und eine additive Fertigungsvorrichtung 12.

Die Komponente 10 ist eine Komponente einer Behälterbehandlungsanlage. Im Einzelnen kann die Komponente 10 eine Komponente einer Behälterbehandlungs- und/oder Behältertransportvorrichtung der Behälterbehandlungsanlage sein.

Die Behälterbehandlungsvorrichtung kann beispielsweise eine Behälterherstellvorrichtung (z. B. Behälterblasmaschine), eine Beschichtungsvorrichtung, eine Entpalletiervorrichtung, eine Rinsvorrichtung (z. B. mit Rinsdüsen), eine Sterilisierungsvorrichtung (z. B. mit Sterilisationsdüsen), eine Füllvorrichtung (z. B. mit Füllventilen), eine Verschließvorrichtung (z. B. mit Verschließköpfen), eine Etikettiervorrichtung (z. B. mit Etikettieraggregaten), eine Druckvorrichtung (z. B. mit Druckköpfen), eine Pasteurisiervorrichtung, eine Klebegebindeherstellvorrichtung (z. B. mit Klebstoffapplikationsdüsen), eine Verpackungsvorrichtung (z. B. mit Packköpfen oder Folieneinschlägern) oder eine Palettiervorrichtung (z. B. mit Palettierköpfen, Schiebeplatten oder dgl.) sein.

Die Behältertransportvorrichtung kann dazu ausgebildet sein, Behälter durch die Behälterbehandlungsanlage zu transportieren. Der Behältertransportvorrichtung kann bspw. mindestens einen Transportstern und/oder mindestens einen Linearförderer aufweisen.

Bevorzugt ist die Komponente 10 ein Ersatzteil oder Verschleißteil der Behälterbehandlungsanlage, vorzugsweise der Behälterbehandlungs- und/oder Behältertransportvorrichtung. Beispielsweise kann die Komponente eine Abdeckkomponente, ein Anlaufelement, ein Abweiselement, ein Gleitelement, ein Distanzelement, ein Fingerelement, eine Halterung, ein Kettenrad, ein Kettenführungselement, eine Klammer, eine Klemme, ein Klotz, ein Keil, ein Lagerelement, ein Mitnehmer, ein Führungselement, ein Ringelement, eine Rolle, ein Rad, eine Scheibe, eine Buchse, eine Hülse, ein Spannelement, ein Dämpfungselement, ein Verbindungselement oder ein Zentrierelement sein.

Die Komponente 10 wird mittels der additiven Fertigungsvorrichtung 12, z. B. ein 3D-Drucker, hergestellt. Bevorzugt ist die additive Fertigungsvorrichtung 12 dazu ausgebildet, im FDM-/FLM-/FFF-Verfahren additiv zu fertigen, z. B. 3D-zu-drucken. Im Einzelnen kann die Steuereinrichtung 32 dazu konfiguriert sein, die additive Fertigungsvorrichtung 12 zum additiven Fertigen der Komponente 10 zu betreiben.

Die additive Fertigungsvorrichtung 12 weist ein Fertigungsbett 14 mit einer Stützfläche 16, die eine vorbestimmte Strukturierung 20 aufweist, auf. Die additive Fertigungsvorrichtung 12 kann ferner bspw. eine Kommunikationsschnittstelle 30 und/oder eine Steuereinrichtung 32 aufweisen.

Das Fertigungsbett 14 kann in Bezug auf eine als 3D-Drucker ausgeführte additive Fertigungsvorrichtung 12 auch als ein Druckbett bezeichnet werden.

Auf der Stützfläche 16 und deren vorbestimmter Strukturierung 20 wird die Komponente 10 additiv gefertigt. Im Einzelnen ist direkt nach Beginn der additiven Fertigung eine Aufstandsfläche 18 der Komponente 10 in Kontakt mit der Stützfläche 16. Die Stützfläche 16 kann die Aufstandsfläche 18 bodenseitig abstützen. Die Aufstandsfläche 18 kann bspw. durch eine unterste Materialschicht der additiv zu fertigenden Komponente 10 gebildet sein.

Die Aufstandsfläche 18 kann im Einbauzustand der Komponente 10 in der jeweiligen Behälterbehandlungs- und/oder Behältertransportvorrichtung in jegliche Richtung (z. B. nach oben, nach unten, zur Seite) gerichtet sein.

Wie bereits erwähnt, weist die Stützfläche 16 die vorbestimmte Strukturierung 20 auf, wie beispielhaft in Figur 2 dargestellt ist. Die vorbestimmte Strukturierung 20 kann sich bspw. nur über einen Abschnitt der Stützfläche 16 oder über die gesamte Stützfläche 16 erstrecken. Bevorzugt erstreckt sich die vorbestimmte Strukturierung 20 zumindest über einen Zentralabschnitt bzw. mittig angeordneten Abschnitt der Stützfläche 16.

Die vorbestimmte Strukturierung 20 kann in die Stützfläche 16 bspw. eingelasert oder eingepresst, z. B. eingeprägt, oder eingeschnitten, z. B. eingraviert, sein.

Die vorbestimmte Strukturierung 20 der Stützfläche 16 bewirkt beim additiven Fertigen eine Strukturierung 22 der Aufstandsfläche 18 der Komponente 10, wie beispielhaft in Figur 3 dargestellt ist. Die Strukturierung 22 kann sich bspw. nur über einen Abschnitt der Aufstandsfläche 18 oder über die gesamte Aufstandsfläche 18 erstrecken. Bevorzugt erstreckt sich die Strukturierung 22 zumindest über einen Zentralabschnitt bzw. mittig angeordneten Abschnitt der Aufstandsfläche 18.

Im Einzelnen wird beim additiven Fertigen der Komponente 10 mittels der vorbestimmten Strukturierung 20 der Stützfläche 16 des Fertigungsbetts 14 (siehe Figur 2) die Strukturierung 22 in die Aufstandsfläche 18 der Komponente 10 eingeformt (siehe Figur 3). Die vorbestimmte Strukturierung 20 des Fertigungsbetts 14 kann als Strukturierung 22 der Aufstandsfläche 18 übertragen werden. Die Strukturierung 22 in der Aufstandsfläche 18 der Komponente 10 wird mittels der vorbestimmten Strukturierung 20 der Stützfläche 16 geformt, z. B. komplementär zu dieser.

Beispielsweise kann aus einer Düseneinheit der additiven Fertigungsvorrichtung 12 Material in die vorbestimmte Strukturierung 20 appliziert werden. Das Material kann bspw. erwärmt und/oder verformbar (z. B. viskos) sein und sich in die vorbestimmte Strukturierung 20 einpassen, z. B. einfließen. Die Strukturierung 22 der Aufstandsfläche 18 kann somit die vorbestimmte Strukturierung 20 der Stützfläche 16 abformen. Bevorzugt können die vorbestimmte Strukturierung 20 und die Strukturierung 22 zueinander zusammenpassende Negativform und Positivform bilden.

Bevorzugt ist die Strukturierung 20, 22 eine Mikrostrukturierung oder eine Submikrostrukturierung, z. B. Nanostrukturierung. Strukturen der Strukturierung 20, 22 können im Mikrometer- oder Submikrometerbereich (z. B. Nanometerbereich) dimensioniert sein.

Besonders bevorzugt bewirkt die Strukturierung 20, 22 eine Strukturfärbung (engl. structural coloration) der jeweiligen Strukturierung 20, 22. Die Strukturfärbung kann irisierend, schillernd oder hologrammartig sein. Die Strukturfärbung kann durch Lichtstreuung, Lichtbrechung und/oder Lichtreflexion mittels geometrischer Formen, Größen und/oder Anordnungen von Strukturen der Strukturierung 20, 22 bewirkt sein. Eine solche Strukturierung 20, 22 kann bspw. als eine farbeffektgebende Mikrostruktur bezeichnet werden.

Strukturfärbung ist ein Phänomen, bei dem Farben durch die Struktur einer Oberfläche (hier: Strukturierung 20, 22 einer Oberfläche der Stützfläche 16 bzw. der Aufstandsfläche 18) und nicht durch Pigmente erzeugt werden. Diese Farben entstehen durch die Interaktion von Licht mit mikroskopischen Strukturen der Strukturierung 20, 22, die Licht in bestimmten Wellenlängen reflektieren, brechen und/oder streuen.

Ein bekanntes Beispiel für Strukturfärbung in der Natur ist der Schmetterlingsflügel. Die schillernden Farben können durch winzige, regelmäßig angeordnete Schuppen, die das Licht auf verschiedene Weise beeinflussen, entstehen. Auch die schillernden Farben von Seifenblasen und die metallischen Farben von Käfern sind auf Strukturfärbung zurückzuführen.

Bei der Strukturfärbung können alle drei Phänomene - Lichtstreuung, Lichtbrechung und Lichtreflektion - eine Rolle spielen. Bei der Lichtstreuung kann das Licht in verschiedene Richtungen verteilt werden, wenn es auf mikroskopische Strukturen der Strukturierung 20, 22 trifft. Dies kann zu schillernden Farben führen, wie z. B. beim Schmetterlingsflügel. Lichtbrechung tritt auf, wenn Licht durch Materialien mit unterschiedlichen Brechungsindizes geht. Dies kann zu Farbänderungen führen, je nachdem, wie das Licht durch die Strukturierung 20, 22 gebrochen wird. Ein Beispiel hierfür sind die Farben, die durch die Struktur von Edelsteinen entstehen können. Lichtreflektion ist die Rückstrahlung von Licht von einer Oberfläche. Bei Strukturfärbung kann die Reflektion durch regelmäßige Muster der Strukturierung 20, 22 verstärkt werden, was zu intensiven und lebendigen Farben führen kann. Dies sieht man bspw. bei metallischen Käfern oder bestimmten Fischarten.

Bevorzugt ist die Strukturierung 20, 22 oder zumindest die von dieser bewirkte Strukturfärbung, soweit vorhanden, für das menschliche Auge sichtbar. Es ist jedoch alternativ auch möglich, dass sämtliche Strukturen der Strukturierung 20, 22 für das menschliche Auge nicht sichtbar sind und auch keine Strukturfärbung bewirken. Beispielsweise können sämtliche Strukturen der Strukturierung 20, 22 ≤ 30 µm, ≤ 10 µm oder ≤ 5 µm sein, z. B. höhenbezogen.

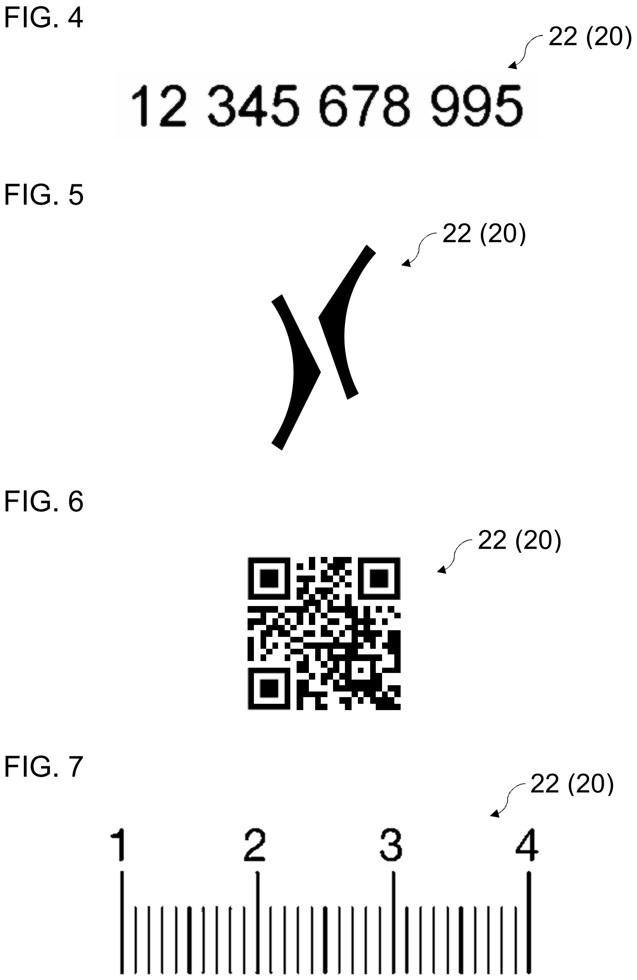

Die Figuren 4 bis 9 zeigen Beispiele für Strukturierungen 22 in der Aufstandsfläche 18, die bspw. bereits mit dem menschlichen Auge oder erst unter einem Mikroskop sichtbar sind. Die jeweils zugehörige vorbestimmte Strukturierung 20 kann bspw. als eine Negativform der Strukturierung 22 oder komplementär zu der Strukturierung 22 ausgebildet sein.

Die Figur 4 zeigt, dass die Strukturierung 22 bspw. alphanumerische Zeichen aufweisen kann, z. B. eine Nummernfolge, ein Wort oder ein Text. Bevorzugt kann die Strukturierung 22 eine Identifikationszeichenfolg, z. B. ID oder Identifikationsnummer, zur Identifikation des Fertigungsbetts 14 und/oder der additiven Fertigungsvorrichtung 12 aufweisen. Die Identifikationszeichenfolge kann fertigungsvorrichtungsindividuell sein. Mittels der Identifikationszeichenfolg kann das Fertigungsbett 14 und/oder die additive Fertigungsvorrichtung 12 einzeln identifizierbar sein.

Allgemein ausgedrückt kann die Strukturierung 22 der Aufstandsfläche 18 (und damit folglich auch die vorbestimmte Strukturierung 20 der Stützfläche 16) zur Einzelidentifikation der additiven Fertigungsvorrichtung 12 und/oder des Fertigungsbetts 14 ausgebildet sein. In diesem Kontext ist es nicht erforderlich, dass die Strukturierung 20, 22 bspw. eine Identifikationszeichenfolge aufweist. Eine Einzelidentifikation kann auch auf andere Weise mittels der Strukturierung 20, 22 ermöglicht werden, z. B. mit einer Strukturierung 20, 22 die ein fertigungsvorrichtungsindividuelles oder fertigungsbettindividuelles Bild oder einen fertigungsvorrichtungsindividuellen oder fertigungsbettindividuellen visuellen Code aufweist.

Die Figur 5 zeigt, dass die Strukturierung 22 bspw. ein Bild aufweisen kann. Das Bild kann bspw. ein Piktogramm, Logo, z. B. ein Herstellerlogo oder Kundenlogo, oder Ähnliches sein.

Die Figur 6 zeigt, dass die Strukturierung 22 einen visuellen Code aufweisen kann. Der visuelle Code kann bspw. ein QR-Code sein, wie dargestellt ist. Alternativ kann der visuelle Code bspw. ein Barcode, Aztec Code, Data Matrix, PDF417, AR-Code oder Zahlen-/Buchstabencode sein.

Die Figur 7 zeigt, dass die Strukturierung 22 eine Skala aufweisen kann. Beispielsweise kann die Skala eine Zentimeterskala oder eine Millimeterskala sein.

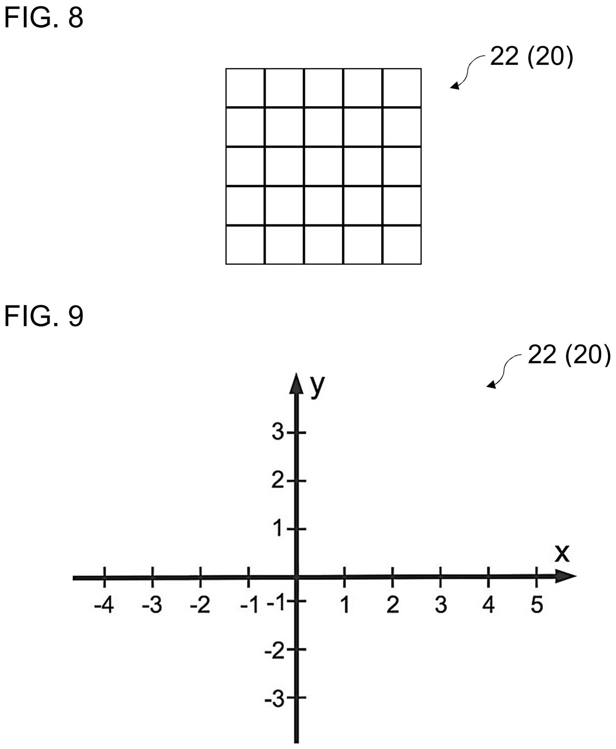

Die Figur 8 zeigt, dass die Strukturierung 22 ein Raster aufweisen kann. Beispielsweise kann das Raster ein Zentimeterraster oder ein Millimeterraster sein.

Die Figur 9 zeigt, dass die Strukturierung 22 ein Koordinatensystem aufweisen kann. Das Koordinatensystem kann bspw. ein lineares Koordinatensystem sein. Bevorzugt kann ein Nullpunkt des Koordinatensystems exakt deckungsgleich mit einem im virtuellen 3D-Modell der Komponente bzw. im G-Code der Komponente 10 definierten Nullpunkt sein.

Mittels der Skala (z. B. Figur 7), mittels des Rasters (z. B. Figur 8) und/oder mittels des Koordinatensystems (z. B. Figur 9) kann bspw. eine Dimensionierung der Komponente 10 durch Überprüfen des der Skala/des Rasters/des Koordinatensystems in der Aufstandsfläche 18 überprüft werden. Die Überprüfung kann bspw. manuell oder mittels einer Erfassungseinrichtung, z. B. eines tragbaren Endgeräts (z. B. Tablet-Computer oder Smartphone) erfolgen.

Die Figuren 4 bis 9 zeigen Beispiele, bei der die Strukturierung 22 (20) eine Kennzeichnung (z. B. Zeichenfolge, Bild, visueller Code usw.) aufweist. Alternativ oder zusätzlich ist es bspw. möglich, dass die Strukturierung 22 (20) einen Verschleißindikator aufweist. Beispielsweise kann ein zunehmendes Zusetzen der vorbestimmten Strukturierung 20 nach einer Vielzahl von additiven Fertigungen dazu führen, dass die Strukturierung 22 weniger stark ausgeprägt ist. Dies kann als ein Indikator dafür gesehen werden, dass bspw. die additive Fertigungsvorrichtung 12 zu warten ist und/oder dass das Bettelement 24 auszutauschen ist. Als ein anderes Beispiel kann ein Verschleißindikator an der Aufstandsfläche 18 bspw. mit zunehmenden Abrieb der Aufstandsfläche 18 im Einsatz der Komponente 10 ein Indikator dafür sein, dass die Komponente 10 auszutauschen ist oder dass die zugehörige Behälterbehandlungs- und/oder transportvorrichtung zu warten ist, z. B. weil der Abrieb zu schnell erfolgt, zu stark ist oder gar nicht auftreten sollte.

Unter erneuter Bezugnahme auf Figur 1 ist beispielhaft dargestellt, dass das Fertigungsbett 14 bevorzugt ein wechselbares / austauschbares Bettelement 24 aufweisen kann. Das Bettelement 24 kann bspw. als, vorzugsweise starre, Bettplatte oder als, vorzugsweise flexible oder biegsame, Bettfolie ausgeführt sein.

Das Bettelement 24 kann in Bezug auf eine als 3D-Drucker ausgeführte additive Fertigungsvorrichtung 12 auch als ein Druckbettelement bezeichnet werden.

Das Bettelement 24 kann die Stützfläche 16 mit der vorbestimmten Strukturierung 20 aufweisen. Bevorzugt kann die Stützfläche 16 mit der vorbestimmten Strukturierung 20 an einer Oberseite des Bettelements 24 angeordnet sein oder die Oberseite des Bettelements 24 bilden.

Das Bettelement 24 kann in oder an einer Aufnahme 26 des Fertigungsbetts 14 lösbar aufgenommen sein. Bevorzugt kann eine Unterseite des Bettelements 24 und eine Bodenfläche der Aufnahme 26 ineinandergreifen. Die Unterseite des Bettelements 24 und die Bodenfläche der Aufnahme 26 weisen bevorzugt eine von einer planen Fläche abweichende Form auf. Beispielsweise kann an einer Unterseite des Bettelements 24 und an einer Bodenfläche der Aufnahme 26 jeweils mindestens ein Rastelement angeordnet sein, die miteinander verrasten können.

Bevorzugt kann eine Unterseite des Bettelements 24 und eine Bodenfläche der Aufnahme 26 komplementär zueinander geformte Strukturen aufweisen. Vorzugsweise können das Bettelement 24 und die Aufnahme 26 über einen Verbindungsmechanismus mit Schlüssel-Schloss-Prinzip miteinander verbunden werden.

Es ist möglich, dass das Bettelement 24 ein Kommunikationsgerät 28 aufweist. Das Kommunikationsgerät 28 ist bevorzugt ein Drahtlos-Kommunikationsgerät. Beispielsweise kann das Kommunikationsgerät 28 ein Transponder, wie beispielsweise ein RFID-Transponder, sein. Alternativ ist es möglich, dass das Kommunikationsgerät 28 beispielsweise drahtgebunden ist und einen physischen Anschlusskontakt zum Kontaktieren aufweist.

Das Kommunikationsgerät 28 kann zum Identifizieren des Bettelements 24 dienen, zum Beispiel gegenüber der additiven Fertigungsvorrichtung 12. Beispielsweise kann mittels des Kommunikationsgeräts 28 eine Identifikationszeichenfolge, zum Beispiel ID oder Identifikationsnummer, des Bettelements 24 gesendet werden.

Beispielsweise kann das Kommunikationsgerät 28 des Bettelements 24 mit einer Kommunikationsschnittstelle 30 der additiven Fertigungsvorrichtung 12 kommunizieren. Die Kommunikation kann drahtlos oder drahtgebunden sein. Die Kommunikationsschnittstelle 30 kann bspw. die Identifikationszeichenfolge des Bettelements 24 von dem Kommunikationsgerät 28 empfangen. Bevorzugt kann die Kommunikationsschnittstelle 30 ein von dem Kommunikationsgerät 28 empfangenes Signal an die Steuereinrichtung 32 leiten.

Die Steuereinrichtung 32 kann dazu konfiguriert sein, die additive Fertigungsvorrichtung 12 abhängig von einem Empfangen oder Nichtempfangen eines Signals von dem Kommunikationsgerät 28 zu betreiben. Vorzugsweise kann beim additiven Fertigen der Komponente 10 abhängig von dem Empfangen oder dem Nichtempfangen des Signals von dem Kommunikationsgerät 28 eine strukturierte Kennzeichnung in oder an der Komponente 10 additiv gefertigt werden. Diese Kennzeichnung kann eine Information zum Empfangen oder Nichtempfangen des Signals angeben. Die Kennzeichnung kann bspw. vorgesehen werden, wenn das Signal empfangen wurde. Alternativ kann die Kennzeichnung bspw. vorgesehen werden, wenn das Signal nicht empfangen wurde.

Die additive Fertigungsvorrichtung 12 kann das Bettelement 24 zusätzlich oder alternativ auf andere Art und Weise überprüfen. Beispielsweise kann die additive Fertigungsvorrichtung 12 das Vorhandensein einer, z. B. optischen, Kennzeichnung des Bettelements 24 überprüfen, z. B. kameragestützt. Die Steuereinrichtung 32 kann dazu konfiguriert sein, die additive Fertigungsvorrichtung 12 abhängig von dem Vorhandensein oder Nichtvorhandensein der Kennzeichnung des Bettelements 24 zu betreiben.

Es ist möglich, dass die additiv gefertigte Komponente 10 mindestens einen Nanopartikelmarker zum Identifizieren eines Materials der Komponente 10 aufweist. Bevorzugt kann der Nanopartikelmarker in dem Material eingebettet sein bzw. beim additiven Fertigen zu einem Teil der Komponente 10 werden.

Mittels des mindestens einen Nanopartikelmarkers kann es möglich sein, ein Material der Komponente 10 zu identifizieren. Beispielsweise kann ein Material der Komponente 10 wie in der deutschen Patentanmeldung 10 2023 132 636.8 beschrieben identifiziert werden. Die deutsche Patentanmeldung 10 2023 132 636.8 ist hierin durch Bezugnahme mitaufgenommen, insbesondere bezüglich des darin offenbarten Verfahrens zum Identifizieren eines Materials einer Komponente, bezüglich des darin offenbarten mobilen Endgeräts, bezüglich des darin offenbarten Verfahrens zum Herstellen einer Komponente für eine Behälterbehandlungsanlage und bezüglich der darin offenbarten Komponente. Alle diese genannten Aspekte sind mit allen hierin offenbarten Merkmalen kombinierbar, einzeln oder in jeglicher Kombination.

Beispielsweise kann die Komponente 10 vollständig aus mehreren aneinander angrenzenden, additiv gefertigten Materialschichten gebildet sein und alle Materialschichten weisen einen oder mehrere unterschiedliche Nanopartikelmarker auf. Der mindestens eine Nanopartikelmarker kann bspw. insgesamt einen Volumen- und/oder Gewichtsanteil an der Komponente 10 von ≥ 0,5 % und/oder ≤ 3 % aufweisen. Der mindestens eine Nanopartikelmarker kann bspw. ein lumineszierender organischer und/oder anorganischer und/oder metallorganischer Farbstoff, ein Pigment und/oder eine Komplexverbindung sein. Der mindestens einen Nanopartikelmarker kann bspw. mit einem Grundstoffgranulat, vorzugsweise Kunststoffgranulat, zu einem Gemisch vermischt worden sein, das zu einem Filament extrudiert wurde, aus dem die Komponente 10 additiv gefertigt wurde. Ein bei Bestrahlung mittels einer Strahlungsquelle der Komponente 10 mit elektromagnetischer Strahlung aufgenommenes Spektrum kann das Material der Komponente 10 identifizieren.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart und beanspruchbar. Alle Bereichsangaben hierin sind derart offenbart und beanspruchbar zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Komponente
- 12: additive Fertigungsvorrichtung
- 14: Fertigungsbett
- 16: Stützfläche
- 18: Aufstandsfläche
- 20: Strukturierung
- 22: Strukturierung
- 24: Bettelement
- 26: Aufnahme
- 28: Kommunikationsgerät
- 30: Kommunikationsschnittstelle
- 32: Steuereinrichtung

## Patentansprüche

1. Verfahren zum Herstellen einer Komponente (10) einer Behälterbehandlungsanlage, wobei das Verfahren aufweist:
additives Fertigen der Komponente (10) mittels einer additiven Fertigungsvorrichtung (12), die ein Fertigungsbett (14) mit einer Stützfläche (16) aufweist, auf der die Komponente (10) additiv gefertigt wird; und
Formen einer Strukturierung (22), vorzugsweise Mikro- oder Submikrostrukturierung, in eine die Stützfläche (16) des Fertigungsbetts (14) kontaktierende Aufstandsfläche (18) der Komponente (10) mittels einer vorbestimmten Strukturierung (20), vorzugsweise Mikro- oder Submikrostrukturierung, der Stützfläche (16) der additiven Fertigungsvorrichtung (12) beim additiven Fertigen der Komponente (10).

2. Verfahren nach Anspruch 1, wobei:
die Strukturierung (22) der Aufstandsfläche (18) eine Strukturfärbung der Strukturierung (22) der Aufstandsfläche (18) bewirkt, vorzugweise durch mindestens eines von Lichtstreuung, Lichtbrechung und Lichtreflexion mittels geometrischer Formen, Größen und/oder Anordnungen von Strukturen der Strukturierung (22) der Aufstandsfläche (18); und/oder
die vorbestimmte Strukturierung (20) der Stützfläche (16) eine Strukturfärbung der vorbestimmten Strukturierung (20) der Stützfläche (16) bewirkt, vorzugweise durch mindestens eines von Lichtstreuung, Lichtbrechung und Lichtreflexion mittels geometrischer Formen, Größen und/oder Anordnungen von Strukturen der vorbestimmten Strukturierung (20) der Stützfläche (16).

3. Verfahren nach Anspruch 1 oder Anspruch 2, wobei:
die Strukturierung (20, 22) der Aufstandsfläche (18) und/oder der Stützfläche (16) eine Kennzeichnung und/oder einen Verschleißindikator aufweist.

4. Verfahren nach einem der vorherigen Ansprüche, wobei die Strukturierung (20, 22) der Aufstandsfläche (18) und/oder der Stützfläche (16) mindestens eines aufweist von:
mindestens ein alphanumerisches Zeichen, vorzugsweise ein Wort oder ein Text,
ein Bild; und
einen visuellen Code, vorzugsweise QR-Code oder Barcode.

5. Verfahren nach einem der vorherigen Ansprüche, wobei:
die Strukturierung (20, 22) der Aufstandsfläche (18) und/oder der Stützfläche (16) mindestens eines von ein Raster, eine Skala und ein Koordinatensystem aufweist, wobei vorzugsweise das Verfahren ferner aufweist:
Überprüfen einer Dimensionierung der additiv gefertigten Komponente (10) durch Überprüfen des Rasters, der Skala und/oder des Koordinatensystems.

6. Verfahren nach einem der vorherigen Ansprüche, wobei mindestens eines erfüllt ist von:
die Strukturierung (20, 22) der Aufstandsfläche (18) und/oder der Stützfläche (16) weist eine Identifikationszeichenfolge zur Identifikation des Fertigungsbetts (14) und/oder der additiven Fertigungsvorrichtung (12) auf;
die Strukturierung (20, 22) der Aufstandsfläche (18) und/oder der Stützfläche (16) ist derart, dass das Fertigungsbett (14) und/oder die additive Fertigungsvorrichtung (12) mittels der Strukturierung (20, 22) einzeln identifizierbar ist; und
die Strukturierung (20, 22) der Aufstandsfläche (18) und/oder der Stützfläche (16) ist zur Einzelidentifikation der additiven Fertigungsvorrichtung (12) und/oder des Fertigungsbetts (14) ausgebildet.

7. Verfahren nach einem der vorherigen Ansprüche, wobei mindestens eines erfüllt ist von:
die Strukturierung (20, 22) der Stützfläche (16) und/oder Aufstandsfläche (18) ist so dimensioniert, dass sie für das menschliche Auge nicht sichtbar ist; und
sämtliche Strukturen der Strukturierung (20, 22) der Stützfläche (16) und/oder Aufstandsfläche (18) sind ≤ 30 µm, ≤ 10 µm oder ≤ 5 µm.

8. Verfahren nach einem der vorherigen Ansprüche, wobei:
das Fertigungsbett (14) ein, vorzugsweise wechselbares, Bettelement (24), vorzugsweise Bettplatte oder Bettfolie, mit der Stützfläche (16) und der vorbestimmten Strukturierung (20) aufweist,
wobei ferner mindestens eines erfüllt ist von:
das Verfahren weist ferner auf: Überprüfen des Bettelements (24) mittels der additiven Fertigungsvorrichtung (12) und vorzugsweise davon abhängiges additives Fertigen der Komponente (10); und
das additive Fertigen der Komponente (10) erfolgt abhängig von einem Empfangen oder Nichtempfangen eines Signals von einem Kommunikationsgerät (28) des Bettelements (24) des Fertigungsbetts (14), wobei vorzugsweise abhängig von dem Empfangen oder dem Nichtempfangen des Signals von dem Kommunikationsgerät (28) eine strukturierte Kennzeichnung in oder an der Komponente (10) additiv gefertigt wird, bevorzugt zum Angeben einer Information zum Empfangen oder Nichtempfangen des Signals.

9. Verfahren nach einem der vorherigen Ansprüche, wobei:
die additiv gefertigte Komponente (10) mindestens einen Nanopartikelmarker zum Identifizieren eines Materials der additiv gefertigten Komponente (10) aufweist,
wobei vorzugsweise mindestens eines erfüllt ist von:
die Komponente (10) ist vollständig aus mehreren aneinander angrenzenden, additiv gefertigten Materialschichten gebildet und alle Materialschichten weisen einen oder mehrere unterschiedliche Nanopartikelmarker auf;
der mindestens eine Nanopartikelmarker weist insgesamt einen Volumen- und/oder Gewichtsanteil an der Komponente (10) von ≥ 0,5 % und/oder ≤ 3 % auf;
der mindestens eine Nanopartikelmarker ist ein lumineszierender organischer und/oder anorganischer und/oder metallorganischer Farbstoff, ein Pigment und/oder eine Komplexverbindung;
der mindestens einen Nanopartikelmarker wurde mit einem Grundstoffgranulat, vorzugsweise Kunststoffgranulat, zu einem Gemisch vermischt, das zu einem Filament extrudiert wurde, aus dem die Komponente (10) additiv gefertigt wurde; und
ein bei Bestrahlung der Komponente (10) mit elektromagnetischer Strahlung mittels einer Strahlungsquelle aufgenommenes Spektrum identifiziert das Material der Komponente (10).

10. Verfahren nach einem der vorherigen Ansprüche, wobei mindestens eines erfüllt ist von:
die Komponente (10) ist ein Verschleißteil oder ein Ersatzteil der Behälterbehandlungsanlage; und
die Komponente (10) ist eine Abdeckkomponente, ein Anlaufelement, ein Abweiselement, ein Gleitelement, ein Distanzelement, ein Fingerelement, eine Halterung, ein Kettenrad, ein Kettenführungselement, eine Klammer, eine Klemme, ein Klotz, ein Keil, ein Lagerelement, ein Mitnehmer, ein Führungselement, ein Ringelement, eine Rolle, ein Rad, eine Scheibe, eine Buchse, eine Hülse, ein Spannelement, ein Dämpfungselement, ein Verbindungselement oder ein Zentrierelement.

11. Komponente (10) für eine Behälterbehandlungsanlage, wobei die Komponente (10) nach einem Verfahren nach einem der vorherigen Ansprüche hergestellt ist.

12. Behälterbehandlungsanlage aufweisend:
mindestens eine Behälterbehandlungs- und/oder -transportvorrichtung; und
eine additive Fertigungsvorrichtung (12) zum additiven Fertigen einer Komponente (10) der mindestens einen Behälterbehandlungs- und/oder -transportvorrichtung, vorzugsweise nach einem Verfahren nach einem Ansprüche 1 bis 10,
wobei:
die additive Fertigungsvorrichtung (12) ein Fertigungsbett (14) mit einer Stützfläche (16) aufweist, auf der die Komponente (10) additiv fertigbar ist, wobei die Stützfläche (16) eine vorbestimmte Strukturierung (20), vorzugsweise Mikro- oder Submikrostrukturierung, aufweist, die dazu ausgebildet ist, eine Strukturierung (22), vorzugsweise Mikro- oder Submikrostrukturierung, in eine die Stützfläche (16) des Fertigungsbetts (14) kontaktierende Aufstandsfläche (18) der Komponente (10) beim additiven Fertigen der Komponente (10) einzuformen.

13. Behälterbehandlungsanlage nach Anspruch 12, wobei mindestens eines erfüllt ist von:
die vorbestimmte Strukturierung (20) der Stützfläche (16) bewirkt eine Strukturfärbung der vorbestimmten Strukturierung (20) der Stützfläche (16), vorzugweise durch mindestens eines von Lichtstreuung, Lichtbrechung und Lichtreflexion mittels geometrischer Formen, Größen und/oder Anordnungen von Strukturen der vorbestimmten Strukturierung (20) der Stützfläche (16);
die vorbestimmte Strukturierung (20) der Stützfläche (16) weist mindestens eines auf von:
- eine Kennzeichnung und/oder einen Verschleißindikator;
- mindestens ein alphanumerisches Zeichen, vorzugsweise ein Wort oder ein Text;
- ein Bild;
- einen visuellen Code, vorzugsweise QR-Code oder Barcode;
- mindestens eines von ein Raster, eine Skala und ein Koordinatensystem; und
- eine Identifikationszeichenfolge zur Identifikation des Fertigungsbetts (14) und/oder der additiven Fertigungsvorrichtung (12);
die vorbestimmte Strukturierung (20) der Stützfläche (16) ist zur Einzelidentifikation der additiven Fertigungsvorrichtung (12) und/oder des Fertigungsbetts (14) ausgebildet;
die vorbestimmte Strukturierung (20) der Stützfläche (16) ist so dimensioniert, dass sie für das menschliche Auge nicht sichtbar ist; und
sämtliche Strukturen der vorbestimmten Strukturierung (20) der Stützfläche (16) sind ≤ 30 µm, ≤ 10 µm oder ≤ 5 µm.

14. Behälterbehandlungsanlage nach Anspruch 12 oder Anspruch 13, wobei:
das Fertigungsbett (14) ein wechselbares Bettelement (24), vorzugsweise Bettplatte oder Bettfolie, mit der die vorbestimmte Strukturierung (20) aufweisenden Stützfläche (16) aufweist.

15. Behälterbehandlungsanlage nach Anspruch 14, wobei mindestens eines erfüllt ist von:
das Bettelement (24) weist ein Kommunikationsgerät (28), vorzugsweise Transponder, besonders bevorzugt RFID-Transponder, auf, vorzugsweise zur Identifikation des Bettelements (24) gegenüber der additiven Fertigungsvorrichtung (12);
die additive Fertigungsvorrichtung (12) weist eine Steuereinrichtung (32) auf, die dazu konfiguriert ist, die additive Fertigungsvorrichtung (12) abhängig von einem Empfangen oder Nichtempfangen eines Signals von einem Kommunikationsgerät (28) des Bettelements (24) zu betreiben, wobei vorzugsweise beim additiven Fertigen der Komponente (10) abhängig von dem Empfangen oder dem Nichtempfangen des Signals von dem Kommunikationsgerät (28) eine strukturierte Kennzeichnung in oder an der Komponente (10) additiv gefertigt wird, bevorzugt zum Angeben einer Information zum Empfangen oder Nichtempfangen des Signals; und
das Fertigungsbett (14) weist eine Aufnahme (26) auf, in oder an der das Bettelement (24) lösbar aufgenommen ist, und eine Unterseite des Bettelements (24) und eine Bodenfläche der Aufnahme (26) sind zum Ineinandergreifen, vorzugsweise miteinander Verrasten, geformt.
